# FASCICULE DE BREVET EUROPEEN

(11) **EP 3 549 186 B1**
(45) Date de publication et mention de la délivrance du brevet: **28.06.2023**
(21) Numéro de dépôt: 17804598.5
(22) Date de dépôt: 01.12.2017
(51) Int. Cl.: H01M 50/148, H01M 50/169, H01M 50/55, H01M 50/176

(54) **BATTERIE ALCALINE**
ALKALIBATTERIE
ALKALINE BATTERY

(30) Priorité: 01.12.2016 FR 1661785
(43) Date de publication de la demande: 09.10.2019
(73) Titulaire: SAFT, 92300 Levallois-Perret (FR)
(72) Inventeur: RIGOBERT, Gérard, 33370 Fargues St. Hilaire (FR)
(74) Mandataire: Hirsch & Associés
(86) Numéro de dépôt international: PCT/EP2017/081214
(87) Numéro de publication internationale: WO 2018/100171

(56) Documents cités:
- GB-A- 494 348

## Description

### DOMAINE TECHNIQUE

L'invention se rapporte au domaine technique des batteries comprenant des éléments électrochimiques à électrolyte alcalin, en particulier de type nickel-cadmium. Ces éléments électrochimiques sont généralement utilisés pour des applications stationnaires, dans des alimentations de secours ou pour l'alimentation d'installations industrielles.

### ETAT DE LA TECHNIQUE

Une batterie est un dispositif de production d'énergie électrique comportant une pluralité d'éléments électrochimiques, encore appelés éléments dans ce qui suit, connectés en série et/ou en parallèle par des conducteurs électriques. Un élément à électrolyte alcalin de format parallélépipédique comprend un bac de format parallélépipédique muni d'une ouverture permettant l'introduction d'au moins un jeu de plaques, et un couvercle destiné à être assemblé sur l'ouverture du bac.

Les éléments de type nickel-cadmium présentent deux bornes de sortie de courant, encore appelés bornes dans ce qui suit, qui sont généralement montées à travers la surface horizontale supérieure du couvercle. Chaque borne dépasse du couvercle de l'élément par l'une de ses extrémités. Cette disposition des bornes empêche de superposer deux éléments. En effet, les bornes doivent être accessibles à un opérateur pour que celui-ci puisse effectuer les opérations de mise en connexion des éléments ou le démontage de ceux-ci. Or, si les bornes sont situées sur la paroi horizontale supérieure du couvercle de l'élément et que les éléments sont superposés, il devient impossible d'y accéder.

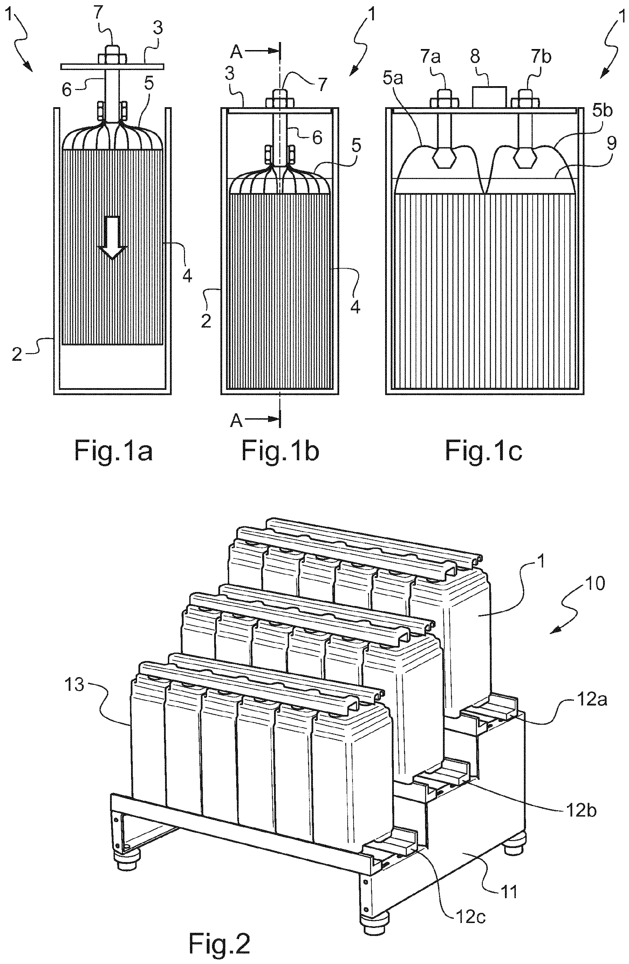

La structure d'un élément de type nickel cadmium de format parallélépipédique de l'art antérieur sera mieux comprise en faisant référence aux figures 1a, 1b et 1c.

La figure 1a représente une vue en coupe longitudinale d'un élément selon l'art antérieur avant fermeture du couvercle sur le bac. L'élément (1) comprend un bac (2) et un couvercle (3) horizontal plan. Un ou plusieurs jeux de plaques (4) est inséré dans le bac. Une partie du bord supérieur de chaque plaque se prolonge en une tête de plaque (5), qui est en fait une extension du collecteur de courant, laquelle extension n'est pas recouverte de matière active. Les têtes de plaques d'une même polarité convergent vers la borne de polarité correspondante et y sont électriquement connectées. Un procédé de connexion des têtes de plaque à une borne est décrit dans le document FR 2 418 547. Le rôle des têtes de plaque est de conduire le courant des électrodes vers la borne (6) correspondante. Sur la figure 1a, seule les têtes de plaques d'une polarité donnée sont représentées. La borne traverse le couvercle de l'élément. Elle dépasse nettement de l'élément par l'une de ses extrémités (7), ce qui empêche la superposition d'un autre élément sur cet élément. Le ou les jeux de plaques sont solidaires du couvercle car ils sont connectés électriquement aux bornes qui elles-mêmes sont fixées au couvercle. Pour réaliser la fermeture du couvercle sur le bac, on fait effectuer un mouvement descendant vertical du ou des jeux de plaques, ce qui vient mettre en contact le couvercle avec le bac. La fermeture du couvercle sur le bac est généralement réalisée par soudage. La fusion de la partie du couvercle et de la partie du bac destinées à entrer en contact l'une avec l'autre est obtenue en utilisant par exemple des plaques chaudes, un laser ou un jet d'air chaud.

La figure 1b montre l'élément après fermeture du couvercle sur le bac,

La figure 1c représente une vue de l'élément de la figure 1b selon le plan de coupe A-A de la figure 1b. Elle montre l'une des deux plus grandes faces latérales du bac de l'élément. Cette figure met en évidence le format rectangulaire des plaques alors que les figures 1a et 1b ne montrent que la tranche des plaques. Elle met également en évidence la présence des deux types de tête de plaques, les têtes de plaques des plaques positives (5a) et les têtes de plaques des plaques négatives (5b). Les têtes de plaques positives (5a) sont reliées à la borne positive (7a) et les têtes de plaques négatives (5b) sont reliées à la borne négative (7b). Un bouchon de remplissage (8) est situé entre les deux bornes. Le niveau de remplissage de l'électrolyte est matérialisé par la ligne (9). La figure 1c montre que la présence des deux bornes et du bouchon de remplissage d'électrolyte sur la face supérieure horizontale du couvercle rend impossible l'empilement de deux éléments sans bloquer l'accès aux bornes et au bouchon de remplissage.

Etant donné qu'on ne peut pas empiler des éléments nickel-cadmium, si l'on souhaite associer plusieurs éléments en rangées afin de constituer une batterie, on a recours à un support comprenant des étagères de différentes hauteurs, chaque étagère recevant une rangée d'éléments. La différence de hauteur entre les étagères permet un décalage en hauteur de la position des bornes d'une rangée d'éléments par rapport à une autre rangée. Une telle batterie est représentée à la figure 2. La batterie (10) comprend un support (11) comprenant différentes étagères (12a, 12b, 12c) de différentes hauteurs. Chaque étagère reçoit une rangée (13) d'éléments assemblés côte à côte et connectés électriquement entre eux. L'utilisation d'un tel support entraine une perte de place pour l'utilisateur. En effet, le volume situé sous chaque étagère est perdu. De plus, comme chaque étagère présente une largeur au moins égale celle d'un élément, un tel support occupe une surface au sol importante.

Des éléments à électrolyte alcalin présentant des bornes sur une paroi verticale de l'élément ont été conçus, permettant ainsi de remédier au problème de la perte de place sur la surface au sol.

On peut citer le document GB 494 348 A et le document EP-A-2 728 641. Ce dernier décrit à la figure 10C un élément à électrolyte alcalin de format parallélépipédique. Le couvercle se présente sous la forme d'une plaque verticale constituant l'une des deux faces les plus grandes du parallélépipède. Les deux bornes sont logées à travers cette plaque verticale. La fermeture de l'élément se fait par soudage de la plaque verticale sur le bac de l'élément. Le remplissage d'électrolyte est effectué à travers un orifice de remplissage disposé sur la surface horizontale supérieure du bac. Dans cette configuration, deux éléments peuvent être assemblés côte à côte et connectés entre eux. Cependant, la zone de soudure se trouve en contact avec l'électrolyte. Or, il existe toujours un risque de fuite d'électrolyte à travers une zone de soudure. Cette configuration ne résout donc pas le problème de l'existence d'un contact entre la zone de soudure et l'électrolyte.

Par conséquent, on recherche un élément à électrolyte alcalin qui puisse être superposé sur un autre élément et dans lequel la zone de contact entre le couvercle de l'élément et le bac de l'élément ne soit pas exposée à l'électrolyte.

On cherche également à pouvoir disposer plusieurs rangées d'éléments placées côte à côte sur un même plan horizontal sans perdre d'espace entre ces rangées.

On cherche également un élément dont le couvercle présente une forme permettant d'avoir accès au pied de la borne. Le pied de la borne est l'extrémité de la borne se trouvant dans l'élément, une fois le couvercle assemblé sur le bac.

Enfin, on cherche un élément dont le couvercle et le bac possèdent une forme permettant une fermeture du couvercle sur le bac de l'élément par un procédé conventionnel, c'est-à-dire faisant intervenir un mouvement de descente verticale du ou des jeux de plaques dans le bac de l'élément, comme expliqué ci-avant en relation avec la figure 1a.

### RESUME DE L'INVENTION

L'invention est définie par les revendications. A cet effet, l'invention propose un élément électrochimique, selon la revendication 1, comprenant :
- un bac comportant une ouverture permettant l'introduction d'au moins un jeu de plaques;
- un couvercle destiné à être assemblé sur l'ouverture du bac, comprenant :
   i) une première paroi comportant au moins une ouverture pour le passage d'une borne de sortie de courant, cette première paroi formant un angle allant de 80 à 110° par rapport à l'horizontale,
   ii) une seconde paroi formant un angle allant de 5° à 85° par rapport à l'horizontale,
la zone de contact entre le bac et le couvercle définissant un plan de fermeture de l'élément, lequel plan de fermeture forme un angle allant de 5° à 85° par rapport à l'horizontale.

Selon un mode de réalisation, le bac contient un électrolyte et cet électrolyte n'est pas en contact avec la zone de contact entre le bac et le couvercle.

Selon un mode de réalisation, la seconde paroi forme un angle allant de 30° à 70°, de préférence de 40 à 70°, de préférence encore de 40 à 50° par rapport à l'horizontale.

Selon un mode de réalisation, la première paroi comporte deux ouvertures permettant chacune le passage d'une borne de sortie de courant.

Selon un mode de réalisation, la seconde paroi présente un premier bord destiné à être mis en contact avec le bac et un second bord en continuité avec la première paroi.

Selon un mode de réalisation, le couvercle présente au moins une paroi horizontale comportant un bouchon de remplissage d'électrolyte.

Selon un mode de réalisation, une partie de la paroi horizontale présente un renfoncement dans lequel est logé le bouchon de remplissage d'électrolyte.

Selon un mode de réalisation, l'élément électrochimique comprend un électrolyte alcalin, par exemple de type nickel-cadmium.

L'invention a également pour objet une batterie comprenant au moins deux éléments électrochimiques superposés l'un sur l'autre, chaque élément étant tel que défini ci-avant, les éléments reposant sur une structure de support.

L'invention a également pour objet un procédé de fabrication, selon la revendication 11, d'un élément électrochimique comprenant les étapes de :
a) mise à disposition d'un bac comportant une ouverture permettant l'introduction d'au moins un jeu de plaques;
b) mise à disposition d'un couvercle destiné à être assemblé sur l'ouverture du bac, ce couvercle comprenant :
   i) une première paroi comportant au moins une ouverture pour le passage d'une borne de sortie de courant, cette première paroi formant un angle allant de 80° à 110° par rapport à l'horizontale,
   ii) une seconde paroi formant un angle allant de 5° à 85° par rapport à l'horizontale,
   la zone de contact entre le bac et le couvercle définissant un plan de fermeture de l'élément, lequel plan de fermeture forme un angle allant de 5° à 85° par rapport à l'horizontale ;
c) fixation de deux bornes de sortie de courant au travers de la première paroi du couvercle, les bornes de courant étant elles-mêmes reliées mécaniquement et électriquement à un jeu de plaques ;
d) introduction du ou des jeux de plaques dans le bac ;
e) mise en contact du couvercle sur le bac ;
f) fermeture de l'élément électrochimique ;
g) éventuellement remplissage du bac par un électrolyte à travers un orifice situé sur le couvercle.

Selon un mode de réalisation, la fermeture du bac s'effectue par soudage.

Selon un mode de réalisation, l'introduction du ou des jeux de plaques dans le bac se fait par un mouvement vertical descendant.

Selon un mode de réalisation, l'élément électrochimique fabriqué par le procédé est tel que défini ci-avant.

### DESCRIPTION DES FIGURES

La figure 1a représente une vue en coupe longitudinale d'un élément selon l'art antérieur avant fermeture du couvercle sur le bac.
La figure 1b représente une vue en coupe longitudinale d'un élément selon l'art antérieur après fermeture du couvercle sur le bac.
La figure 1c représente une vue de l'élément selon l'art antérieur selon le plan de coupe A-A de la figure 1b.
La figure 2 représente une vue en perspective d'une batterie comprenant :
   - plusieurs rangées d'éléments selon l'art antérieur,
   - un support comprenant des étagères, chaque rangée d'éléments étant disposée sur une étagère du support.
La figure 3a représente une vue en coupe longitudinale d'un élément selon l'invention, avant fermeture du couvercle sur le bac.
La figure 3b représente une vue en coupe longitudinale d'un élément selon l'invention, après fermeture du couvercle sur le bac.
La figure 3c représente une vue de l'élément selon l'invention selon le plan de coupe A-A de la figure 3b.
La figure 4 représente une vue en coupe longitudinale d'un élément selon l'invention, dont le couvercle est muni d'un renfoncement recevant un bouchon de remplissage d'électrolyte.
La figure 5 représente un empilement d'éléments selon l'invention. Le niveau inférieur et le niveau supérieur de l'empilement reçoivent chacun deux rangées d'éléments, chaque rangée étant constituée d'un assemblage d'éléments côte-à-côte.
La figure 6 représente un empilement de deux rangées d'éléments selon l'invention, connectés électriquement entre eux.

### EXPOSE DE MODES DE REALISATION

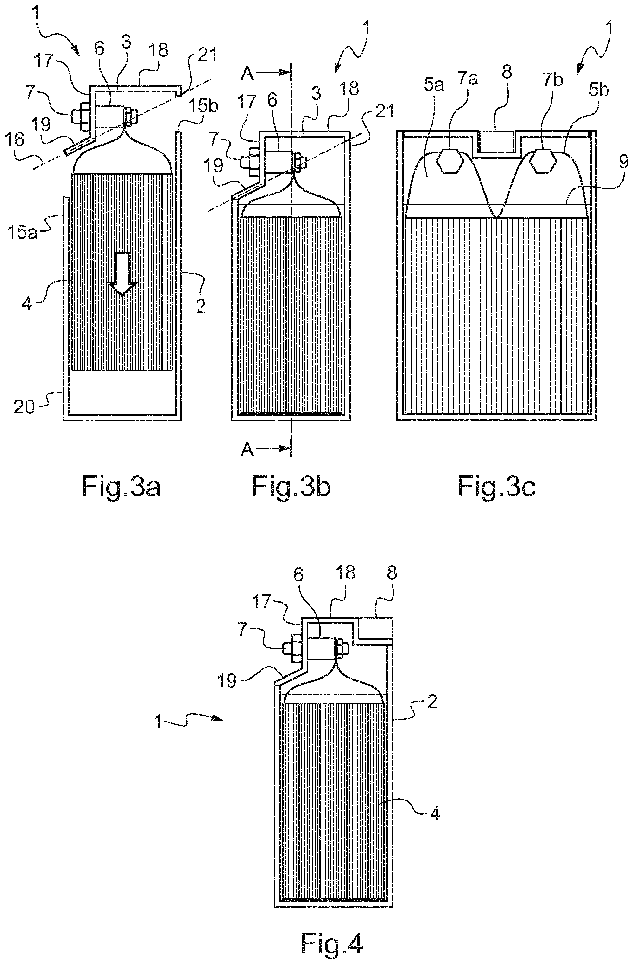

L'élément selon l'invention se caractérise par une forme particulière de couvercle et de bac. La forme du couvercle et celle du bac vont être expliquées en relation avec la figure 3a.

La figure 3a représente une vue en coupe longitudinale d'un élément (1) avant fermeture du couvercle (3) sur le bac (2). Le bac est généralement de forme parallélépipédique. Il comporte une ouverture qui est suffisamment large pour permettre d'y introduire un ou plusieurs jeux de plaques (4). Deux des parois verticales du bac, généralement les parois verticales de plus grande surface du bac, ont des hauteurs différentes (15a, 15b). Cette différence de hauteur permet de créer un plan de fermeture incliné (16) du couvercle sur le bac. Par le terme « plan de fermeture incliné », on entend un plan de fermeture qui forme un angle allant de 5° à 85° par rapport à l'horizontale. Pour une profondeur donnée de bac, on peut faire varier l'angle du plan de fermeture dans la plage allant de 5 à 85°, en modifiant la différence de hauteur entre les deux parois verticales.

Le couvercle (3) présente une ouverture dont la forme vient compléter celle de l'ouverture du bac. Le couvercle présente une première paroi (17) formant un angle allant de 80 à 110° par rapport à l'horizontale. Typiquement, cette première paroi est verticale. Elle comporte au moins une ouverture pour le passage d'une borne (6). Généralement, elle comprend deux ouvertures, une pour le passage de la borne positive et l'autre pour le passage de la borne négative. Les deux bornes se superposent selon les vues des figures 3a et 3b mais sont visibles sur la figure 3c. Cette première paroi (17) est en continuité avec une paroi horizontale (18).

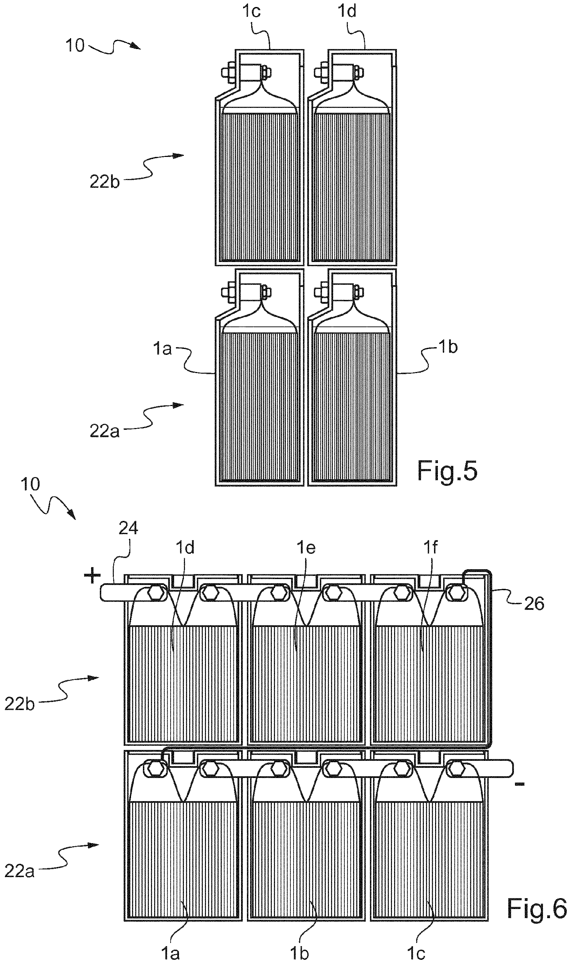

Le couvercle présente une seconde paroi (19) en continuité avec la première paroi (17). Cette seconde paroi forme un angle allant de 5° à 85° par rapport à l'horizontale. Cet angle est identique à l'angle du plan de fermeture défini plus haut pour le bac. La présence de cette seconde paroi inclinée permet de créer un retrait de la paroi verticale (17) du couvercle par rapport à la paroi verticale (20) du bac. Ce retrait crée un espace disponible pour recevoir l'extrémité (7) des bornes située à l'extérieur de l'élément. L'homme du métier sait calculer pour une longueur donnée de borne dépassant de l'élément, la longueur et l'inclinaison de la seconde paroi. Grâce à cette seconde paroi inclinée, la surface au sol occupée par une batterie comprenant une pluralité d'éléments accolés correspond uniquement à la surface occupée par les bacs de ces éléments. Cet avantage est mis en évidence à la figure 5.

L'angle du plan de fermeture peut être ajusté pour faciliter l'accès au pied de la borne. S'il est trop faible, il est possible que le pied de la borne soit difficilement accessible par un opérateur ou par un outil. S'il est trop élevé, le couvercle peut présenter une hauteur trop importante, ce qui pénalise la capacité volumique de l'élément. En effet comme le montre la figure 3a, le volume interne du couvercle est occupé par une partie de la borne et par la réunion des têtes de plaques. Or, ces deux constituants ne participent pas à la génération de courant électrique. Par conséquent, on choisira généralement un angle du plan de fermeture allant de 30° à 70°, de préférence de 40 à 70°, de préférence encore de 40 à 50° par rapport à l'horizontale.

Le couvercle présente une troisième paroi (21) sur une face opposée à la première paroi (17). La hauteur de cette troisième paroi est déterminée en prolongeant le plan de fermeture (16) jusqu'à ce qu'il coupe la troisième paroi.

Le ou les jeux de plaques (4) sont solidaires du couvercle (3) puisque le ou les jeux de plaques sont connectés électriquement aux bornes (6) qui elles-mêmes sont fixées à travers le couvercle. Pour réaliser la fermeture du couvercle sur le bac, on introduit le ou les jeux de plaques dans le bac et par un mouvement descendant vertical schématisé par une flèche sur la figure 3a, on vient mettre en contact le couvercle avec le bac. La fermeture du couvercle sur le bac est généralement réalisée par soudage. La fusion de la partie du couvercle et de la partie du bac destinées à entrer en contact l'une avec l'autre est obtenue en utilisant par exemple des plaques chaudes, un laser ou un jet d'air chaud. L'invention permet donc de conserver le procédé conventionnel de fermeture d'un élément de type nickel-cadmium.

La figure 3b montre l'élément après fermeture du couvercle sur le bac,

La figure 3c représente une vue de l'élément représenté à la figure 3b selon le plan de coupe A-A de la figure 3b. La figure 3c est une vue de l'une des deux plus grandes faces latérales de l'élément. Cette vue montre le format rectangulaire des plaques alors que les figures 3a et 3b ne montrent que la tranche des plaques. Elle montre également deux types de tête de plaques, les têtes de plaques des plaques positives (5a) et les têtes de plaques des plaques négatives (5b). Les têtes de plaques positives (5a) sont reliées à la borne positive (7a) et les têtes de plaques négatives (5b) sont reliées à la borne négative (7b). Comme les bornes sont situées sur une face verticale du couvercle, la surface horizontale supérieure du couvercle dépourvue de bornes peut être avantageusement occupée par un bouchon de remplissage (8) d'électrolyte. Ce bouchon peut se situer entre les têtes de plaques positives et négatives (5a, 5b), dans un renfoncement du couvercle, comme le montre la figure 3c. Afin de réduire les risques de fuite d'électrolyte à travers une zone de soudure, on veillera à ce que le niveau d'électrolyte soit situé sous la zone de contact entre le bac et le couvercle. Le niveau d'électrolyte est matérialisé par la ligne (9). Il se situe sous la zone de contact entre la paroi inclinée (19) du couvercle et la paroi du bac (2).

La figure 3c met en évidence la surface quasiment plane de la partie supérieure horizontale du couvercle, ce qui permet l'empilement d'éléments.

Selon une variante, le renfoncement logeant le bouchon de remplissage se situe à proximité de la paroi verticale opposée à celle recevant les bornes, comme illustré à la figure 4. Ce mode de réalisation permet un accès au bouchon de remplissage plus aisé que lorsque celui-ci est situé à proximité du centre du couvercle, comme cela est le cas dans le mode de réalisation de la figure 3c.

Le matériau utilisé pour la fabrication du bac et du couvercle est un matériau couramment utilisé dans la technologie des éléments à électrolyte alcalin. De préférence, il s'agit de matière plastique.

L'invention permet de supprimer le volume perdu entre les éléments, qui était occupé dans l'art antérieur par les bornes. Cet avantage est illustré à la figure 5. Celle-ci montre une batterie (10) comprenant un empilement d'éléments (1a, 1b, 1c, 1d) selon l'invention. Le niveau inférieur de l'empilement comprend une rangée (22a) de deux éléments disposés côte à côte (1a, 1b). De même, le niveau supérieur de l'empilement comprend une rangée (22b) de deux éléments disposés côte à côte (1c, 1d). On constate que les éléments sont accolés les uns aux autres et empilés les uns sur les autres, sans perte d'espace entre eux, ni dans la direction verticale, ni dans la direction horizontale. La compacité de la batterie est donc améliorée.

La figure 6 représente une batterie (10) comprenant un empilement de deux rangées (22a, 22b) d'éléments (1a-1f) selon l'invention. Les éléments de chaque rangée sont connectés électriquement entre eux par des barrettes métalliques (24) de forte section. La rangée supérieure d'éléments est connectée électriquement à la rangée inférieure d'éléments par un conducteur électrique (26). L'opérateur a un accès facile aux bornes et aucun n'espace n'est perdu entre les éléments. Cette figure démontre donc l'intérêt de positionner les bornes sur une face verticale du couvercle des éléments.

## Revendications

1. Elément électrochimique (1) comprenant :
- un bac (2) comportant une ouverture permettant l'introduction d'au moins un jeu de plaques (4) ;
- un couvercle (3) destiné à être assemblé sur l'ouverture du bac, comprenant :
i) une première paroi (17) comportant au moins une ouverture pour le passage d'une borne (6) de sortie de courant, cette première paroi formant un angle allant de 80 à 110° par rapport à l'horizontale,
ii) une seconde paroi (19) formant un angle allant de 5° à 85° par rapport à l'horizontale,
la zone de contact entre le bac et le couvercle définissant un plan de fermeture (16) de l'élément, lequel plan de fermeture forme un angle allant de 5° à 85° par rapport à l'horizontale.

2. Elément électrochimique selon la revendication 1, dans lequel le bac contient un électrolyte (9) et cet électrolyte n'est pas en contact avec la zone de contact entre le bac et le couvercle.

3. Elément électrochimique selon l'une des revendications 1 à 2, dans lequel la seconde paroi (19) forme un angle allant de 30° à 70°, de préférence de 40 à 70°, de préférence encore de 40 à 50° par rapport à l'horizontale.

4. Elément électrochimique selon l'une des revendications précédentes, dans lequel la première paroi (17) comporte deux ouvertures permettant chacune le passage d'une borne de sortie de courant (6).

5. Elément selon l'une des revendications 1 à 4, dans lequel la seconde paroi (19) présente un premier bord destiné à être mis en contact avec le bac et un second bord en continuité avec la première paroi (17).

6. Elément électrochimique selon l'une des revendications précédentes, dans lequel le couvercle présente au moins une paroi horizontale (18) comportant un bouchon de remplissage (8) d'électrolyte.

7. Elément électrochimique selon la revendication 6, dans lequel une partie de la paroi horizontale présente un renfoncement dans lequel est logé le bouchon de remplissage d'électrolyte.

8. Elément électrochimique selon l'une des revendications précédentes, comprenant un électrolyte alcalin.

9. Elément électrochimique selon la revendication 8, de type nickel-cadmium.

10. Batterie (10) comprenant au moins deux éléments électrochimiques (1) superposés l'un sur l'autre, chaque élément étant tel que défini selon l'une des revendications précédentes, les éléments reposant sur une structure de support.

11. Procédé de fabrication d'un élément électrochimique (1) comprenant les étapes de :
a) mise à disposition d'un bac (2) comportant une ouverture permettant l'introduction d'au moins un jeu de plaques (4);
b) mise à disposition d'un couvercle (3) destiné à être assemblé sur l'ouverture du bac, ce couvercle comprenant :
i) une première paroi (17) comportant au moins une ouverture pour le passage d'une borne (6) de sortie de courant, cette première paroi formant un angle allant de 80° à 110° par rapport à l'horizontale,
ii) une seconde paroi (19) formant un angle allant de 5° à 85° par rapport à l'horizontale,
la zone de contact entre le bac et le couvercle définissant un plan de fermeture (16) de l'élément, lequel plan de fermeture forme un angle allant de 5° à 85° par rapport à l'horizontale ;
c) fixation de deux bornes de sortie de courant (6) au travers de la première paroi du couvercle, les bornes de courant étant elles-mêmes reliées mécaniquement et électriquement à un jeu de plaques ;
d) introduction du ou des jeux de plaques dans le bac ;
e) mise en contact du couvercle sur le bac ;
f) fermeture de l'élément électrochimique ;
g) éventuellement remplissage du bac par un électrolyte (9) à travers un orifice (8) situé sur le couvercle.

12. Procédé selon la revendication 11, dans laquelle la fermeture du bac s'effectue par soudage.

13. Procédé selon l'une des revendications 11 à 12, dans lequel l'introduction du ou des jeux de plaques dans le bac se fait par un mouvement vertical descendant.

14. Procédé de fabrication selon l'une des revendications 11 à 13, dans lequel l'élément est tel que défini dans les revendications 2 à 9.

## Patentansprüche

1. Eine Elektrochemische Zelle (1), umfassend:
- ein Behälter (2) mit einer Öffnung, die die Einführung mindestens eines Satzes von Platten (4) ermöglicht;
- eine Abdeckung (3), die dazu bestimmt ist, an der Öffnung des Behälters montiert zu werden, umfassend:
i) eine erste Wand (17) mit mindestens einer Öffnung zum Durchtritt eines Stromausgangsanschlusses (6), wobei diese erste Wand einen Winkel im Bereich von 80° bis 110° zur Horizontalen bildet,
ii) eine zweite Wand (19), die einen Winkel im Bereich von 5° bis 85° zur Horizontalen bildet,
wobei die Kontaktfläche zwischen dem Behälter und der Abdeckung eine Schliessebene (16) der Zelle definiert welche Schliessebene einen Winkel im Bereich von 5° bis 85° zur Horizontalen bildet.

2. Elektrochemische Zelle nach Anspruch 1, wobei der Behälter einen Elektrolyten (9) enthält und dieser Elektrolyten nicht in Kontakt mit der Kontaktfläche zwischen des Behälters und der Abdeckung ist.

3. Elektrochemische Zelle nach einem der Ansprüche 1 bis 2, bei dem die zweite Wand (19) einen Winkel im Bereich von 30° bis 70°, bevorzugt 40° bis 70°, besonders bevorzugt 40° bis 50 ° zur Horizontalen bildet.

4. Elektrochemische Zelle nach einem der vorhergehenden Ansprüche, wobei die erste Wand (17) umfasst zwei Öffnungen, die jeweils den Durchgang eines Stromausgangsanschlusses (6) ermöglichen.

5. Elektrochemische Zelle nach einem der Ansprüche 1 bis 4, bei dem die zweite Wand (19) einer ersten Kante, die dazu bestimmt ist, mit dem Behälter in Kontakt gebracht zu werden, und eine zweite Kante in Kontinuität mit der ersten Wand (17) aufweist

6. Elektrochemische Zelle nach einem der vorhergehenden Ansprüche, wobei die Abdeckung mindestens eine horizontale Wand (18) mit einer Elektrolytfüllkappe (8) umfasst.

7. Elektrochemische Zelle nach Anspruch 6, wobei ein Abschnitt der horizontalen Wand eine Ausnehmung, in der die Elektrolytfüllkappe untergebracht ist, umfasst.

8. Elektrochemische Zelle nach einem der vorhergehenden Ansprüche, umfassend einen alkalischen Elektrolyten.

9. Elektrochemische Zelle nach Anspruch 8 des Nickel-Cadmium-Typs.

10. Batterie (10) mit mindestens zwei übereinander angeordneten elektrochemischen Zellen (1), wobei jede Zelle wie in einem der vorhergehenden Ansprüche definiert ist, wobei die Zellen auf einer Trägerstruktur aufliegen.

11. Verfahren zur Herstellung einer elektrochemischen Zelle (1), umfassend die Schritte:
a) Bereitstellen eines Behälters (2) mit einer Öffnung, die es Einbringen mindestens eines Satzes von Platten (4) ermöglicht;
b) Bereitstellen einer Abdeckung (3), die dazu bestimmt ist, an der Öffnung des Behälters montiert zu werden, wobei diese Abdeckung umfasst:
i) eine erste Wand (17) mit mindestens einer Öffnung zum Durchtritt eines Stromausgangsanschlusses (6) wobei diese erste Wand einen Winkel im Bereich von 80° bis 110° zur Horizontalen bildet,
ii) eine zweite Wand (19), die einen Winkel im Bereich von 5° bis 85° zur Horizontalen bildet,
wobei die Kontaktfläche zwischen dem Behälter und der Abdeckung eine Schliessebene (16) der Zelle definiert, die einen Winkel im Bereich von 5° bis 85° zur Horizontalen bildet;
c) Fixieren von zwei Stromausgangsanschlüssen (6) durch die erste Wand der Abdeckung, die Stromanschlüsse selbst mechanisch und elektrisch mit einem Satz von Platten verbunden sind;
d) Einführen des einen oder die mehreren Sätze von Platten in den Behälter;
e) Inkontaktbringen der Abdeckung auf dem Behälter;
f) Schließen der elektrochemischen Zelle;
g) gegebenenfalls Füllen des Behälters mit einem Elektrolyten (9) durch eine am Deckel befindliche Öffnung (8).

12. Verfahren nach Anspruch 11, wobei das Schließen des Behälters durch Schweißen durchgeführt wird

13. Verfahren nach einem der Ansprüche 11 bis 12, bei dem das Einbringen des oder die Plattensätze in dem Behälter durch eine nach unten gerichtete Vertikalbewegung ausgeführt werden.

14. Herstellungsverfahren nach einem der Ansprüche 11 bis 13, in wobei die elektrochemische Zelle wie in den Ansprüchen 2 bis 9 definiert ist.

## Claims

1. An electrochemical cell (1) comprising:
- a container (2) having an opening for introducing at least one set of plates (4);
- a cover (3) intended to be assembled over the opening of the container, comprising:
i) a first wall (17) having at least one opening for the passage of a current output terminal (6), said first wall making an angle of from 80° to 110° with respect to the horizontal,
ii) a second wall (19) making an angle of from 5° to 85° with respect to the horizontal,
the region of contact between the container and the cover defining a closure plane (16) of the cell, wherein the closure plane makes an angle ranging from 5° to 85° with respect to the horizontal.

2. The electrochemical cell according to claim 1, wherein the container contains an electrolyte (9) and said electrolyte is not in contact with the region of contact between the container and the cover.

3. The electrochemical cell according to one of claims 1 to 2, wherein the second wall (19) makes an angle ranging from 30° to 70°, preferably from 40 to 70°, more preferably from 40 to 50° with respect to the horizontal.

4. The electrochemical cell according to one of the preceding claims, wherein the first wall (17) has two openings each allowing the passage of a current output terminal (6).

5. The electrochemical cell according to one of claims 1 to 4, wherein the second wall (19) has a first edge adapted to be brought into contact with the container and a second edge which is continuous with the first wall (17).

6. The electrochemical cell according to one of the preceding claims, wherein the cover has at least one horizontal wall (18) having a filling plug (8) for electrolyte.

7. The electrochemical cell according to claim 6, wherein a portion of the horizontal wall has a recess in which the electrolyte filling plug is housed.

8. The electrochemical cell according to one of the preceding claims, comprising an alkaline electrolyte.

9. The electrochemical cell according to claim 8, of the nickel-cadmium-type.

10. A battery (10) comprising at least two electrochemical cells (1) placed one on top of the other, each cell being as defined according to one of the preceding claims, the cells resting on a support structure.

11. A method of manufacturing an electrochemical cell (1) comprising the steps of:
a) providing a container (2) having an opening for introducing at least one set of plates (4);
b) providing a cover (3) intended to be assembled over the opening of the container, said cover comprising:
i) a first wall (17) comprising at least one opening for the passage of a current output terminal (6), said first wall making an angle ranging from 80° to 110° with respect to the horizontal,
ii) a second wall (19) making an angle of from 5° to 85° with respect to the horizontal,
the region of contact between the container and the cover defining a closure plane (16) of the cell, the closure plane making an angle of 5° to 85° with respect to the horizontal;
c) fixing two current output terminals (6) through the first wall of the cover, the current output terminals themselves being mechanically and electrically connected to a set of plates;
d) introducing the one or more sets of plates into the container;
e) engaging the cover onto the container;
f) closing the electrochemical cell;
g) optionally filling the container with an electrolyte (9) through an orifice (8) located on the cover.

12. The method of claim 11, wherein the container closure is carried out by welding.

13. The method according to one of claims 11 to 12, wherein the introduction of the one or more sets of plates into the container is performed by a downward vertical movement.

14. The method according to one of claims 11 to 13, wherein the cell is as defined in claims 2 to 9.
